(19) Europäisches Patentamt
European Patent Office
Office européen des brevets

(11) Numéro de publication: **0 381 568 A1**

(12) # DEMANDE DE BREVET EUROPEEN

(21) Numéro de dépôt: **90400240.9**

(51) Int. Cl.5: **C07F 9/6593**

(22) Date de dépôt: **29.01.90**

(30) Priorité: **31.01.89 FR 8901182**

(43) Date de publication de la demande:
**08.08.90 Bulletin 90/32**

(84) Etats contractants désignés:
**AT BE CH DE DK ES FR GB GR IT LI LU NL SE**

(71) Demandeur: **PIERRE FABRE MEDICAMENT**
**125, Rue de la Faisanderie**
**F-75116 Paris(FR)**

(72) Inventeur: **Duflos, Alain**
**12, rue Mathieu Estadieu**
**F-81100 Castres(FR)**
Inventeur: **Patoiseau, Jean-François**
**7, rue Jules Ferry**
**F-81100 Castres(FR)**
Inventeur: **Labarre, Jean-François**
**30, rue des Géraniums**
**F-31400 Toulouse(FR)**

(74) Mandataire: **Ahner, Francis et al**
**CABINET REGIMBEAU, 26, avenue Kléber**
**F-75116 Paris(FR)**

(54) **Procédé de préparation diazo spiro cyclotriphosphazènes.**

(57) La présente invention concerne un procédé de préparation de diazo spiro cyclotriphosphazènes par réaction d'une polyamine sur l'hexachlorocyclotriphosphazène, la réaction étant conduite en milieu biphasique liquide.

EP 0 381 568 A1

## PROCEDE DE PREPARATION DIAZO SPIRO CYCLOTRIPHOSPHAZENES

La présente invention, réalisée au Centre de Recherche PIERRE FABRE MEDICAMENT, concerne un nouveau procédé de préparation de diaza spiro cyclotriphosphazènes et plus particulièrement de 2,2,4,4-tétrachloro-2,2,4,4-tétrahydro-1,3,5,7,11-pentaaza-2,4,6-triphospha (6 $P^V$) spiro [5,5] undéca-1,3,5-triène I ci-après désigné DIAM 3 $Cl_4$ et de 7,7-(1,4-butanediyl) bis [2,2,4,4-tétrachloro-2,2,4,4-tétrahydro-1,3,5,7,11-pentaaza-2,4,6-triphospha (6 $P^V$) spiro [5,5] undéca-1,3,5-triène] II ci-après désigné SPM $Cl_8$.

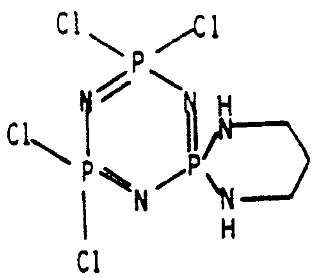

I

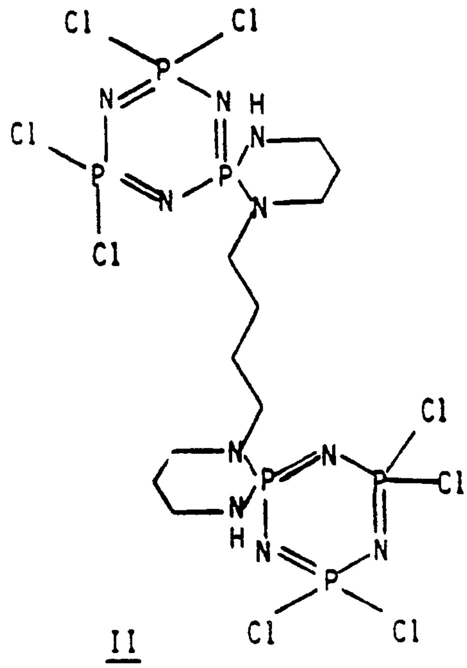

II

Ces composés décrits précédemment sont des intermédiaires utiles dans la synthèse de drogues anticancéreuses, dans lesquelles les atomes de chlore sont remplacés par des groupements aziridinyles (J.F. LABARRE et Coll. - Brevet FR. N° 82.19768 du 25.11.82 et N° 86.03155 du 06.03.86).

Selon la technique antérieure, les composés DIAM 3 $Cl_4$ et SPM $Cl_8$ sont obtenus respectivement par action de la 1-3 propanediamine et de la spermine sur l'hexanchlorocyclotriphosphazène ($N_3P_3Cl_6$) III, la réaction étant conduite dans des solvants organiques tels qu'hydrocarbures ou solvants chlorés.

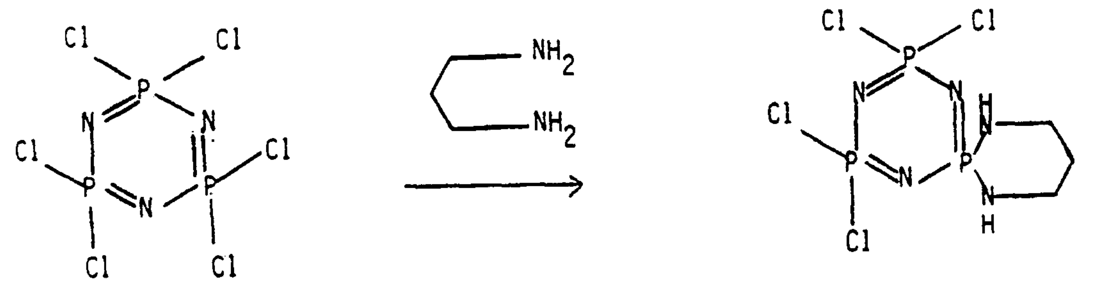

I

III

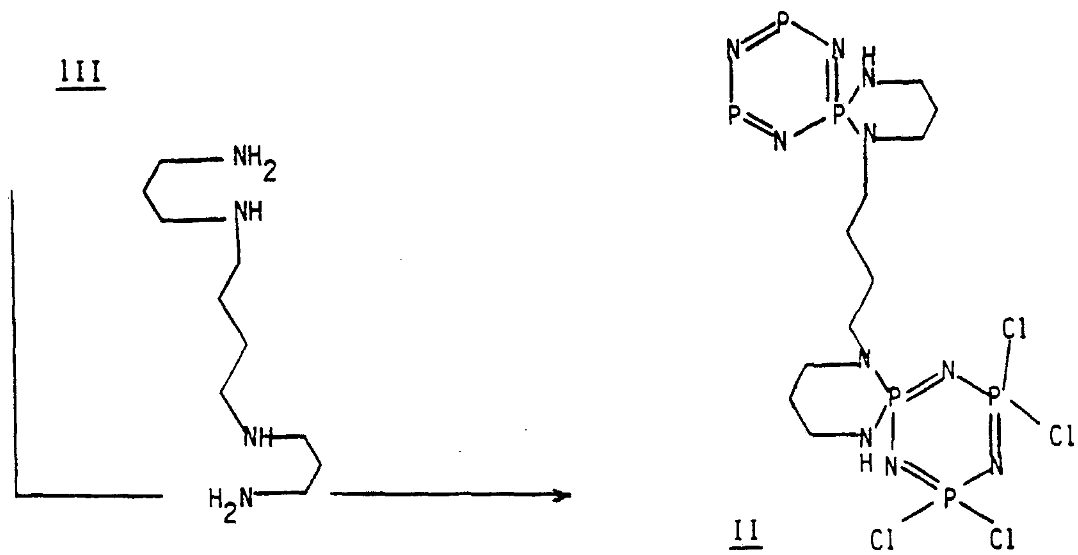

II

Les rendements obtenus selon cette technique vont de 30 % pour le SPM $Cl_8$ à 70 % pour DIAM 3 $Cl_4$.

La présente invention consiste à réaliser le type de réactions ci-dessus dans un système biphasique constitué de 2 phases liquides.

La phase organique est un solvant ou un mélange de solvants non entièrement miscible à l'eau ; on utilisera de préférence un éther ou un hydrocarbure saturé ou aromatique.

A titre d'exemple non limitatif, on citera le toluène, l'éther éthylique, l'éther isopropylique, le tétrahydrofuranne comme solvants ou co-solvants.

Le volume de la phase organique sera tel que la concentration en $N_3P_3Cl_6$ III dans cette phase soit comprise entre 20 g/l et 200 g/l et de préférence voisine de 100 g/l.

La phase aqueuse est une solution alcaline générée par une base minérale ou organique telle que la soude, la potasse, la triéthylamine, de manière à pouvoir capter l'acide chlorhydrique formé au cours de la réaction. La concentration en base pourra être comprise entre 0,1 N et 10 N et de préférence entre 0,5 N et 2,5 N.

La phase aqueuse est, de surcroît, saturée partiellement par un sel minéral de manière à assurer un passage optimum de l'amine en phase organique. On pourra utiliser, à titre d'exemple, le chlorure de sodium à une concentration pouvant aller jusqu'à saturation et de préférence comprise entre 200 g/l et 300 g/l.

Le volume de la phase aqueuse sera déterminé de manière à ce que la base soit en quantité suffisante pour capter l'acide chlorhydrique libéré.

L'amine mise en oeuvre présentera un rapport stoëchiométrique avec $N_3P_3Cl_6$ compris entre 1 et 1,5 et de préférence entre 1,05 et 1,2.

La réaction est effectué à une température comprise entre -10° C et +40° C. D'une façon avantageuse, elle pourra être effectuée à la température ambiante.

Le temps de réaction est compris entre 30 minutes et 4 heures, la réaction étant généralement terminée au bout de 2 heures.

La réaction terminée, le produit est récupéré de la phase organique selon les méthodes classiques d'isolement et de purification avec des rendements de 85 à 90 %.

Les exemples ci-après illustrent l'invention sans en limiter la portée.

**Exemple 1 : Synthèse de DIAM 3 $Cl_4$**

Dans un réacteur de 500 ml, on introduit 8,8 g de soude en pastille, 100 g de glace et 8,9 g (1,2 mole) de 1-3 diaminopropane. On ajoute sous agitation une solution de 34,8 g d'hexachlorocyclotriphosphazène dans 300 ml d'éther isopropylique.

Après 15 minutes, on ajoute 30 g de chlorure de sodium et on maintient la température ambiante sous agitation pendant 2 heures.

Après décantation, la phase aqueuse est extraite par 50 ml d'éther isopropylique. Les phases organiques, groupées, sont lavées à l'eau et par 50 ml de saumure saturée.

Après séchage sur sulfate de sodium et filtration, le solvant est évaporé sous vide. Le résidu cristallin est repris dans 200 ml d'hexane, filtré, rincé à l'hexane et séché sous vide.

On obtient 30,6 g de DIAM 3 $Cl_4$ (Rendement = 88 %).

F = 164 °C

CCM : silice 60 F 254 Merck. Eluant : cyclohexane/acétate d'éthyle/chlorure de méthylène : 60/20/20.

Rf = 0,30

**Exemple 2 : Synthèse de SPM $Cl_8$**

Dans un réacteur de 2 litres, on introduit 100 g d'hexachlorocyclotriphosphazène, 200 g de chlorure de sodium, 800 ml d'éther éthylique et 250 ml de tétrahydrofuranne.

On ajoute ensuite sous forte agitation une solution de 29,1 g de spermine dans 634 ml de soude normale.

Après 3 heures d'agitation à temperature ambiante, la phase organique est lavée à l'eau puis par une solution saturée de NaCl.

Après séchage sur sulfate de sodium et évaporation à sec sous vide, le résidu cristallin est repris par 350 ml de THF et filtré sur 50 g de silice.

Après évaporation à sec, le produit est repris par 80 ml d'éther isopropylique, filtré sur fritté, essoré et rincé par 200 ml d'hexane pour donner, après séchage sous vide à poids constant, 92 g de SMP $Cl_8$ - (Rendement 85 %).

F = 226-227 °C

CCM : Silice de 60 F 254 Merck. Eluant : acétate d'éthyle/hexane : 50/50 Rf = 0,4

## Revendications

1. Procédé de préparation de diazo spiro cyclotriphosphazènes par réaction d'une polyamine sur l'hexachlorocyclotriphosphazène, caractérisé en ce que la réaction est conduite en milieu biphasique liquide, additionné d'un sel minéral.

2. Procédé selon la revendication 1, caractérisé en ce que le sel minéral est du chlorure de sodium présent à une concentration pouvant aller jusqu'à saturation et de préférence comprise entre 200 g/l et 300 g/l.

3. Procédé selon l'une des revendications 1 et 2, caractérisé en ce que l'on fait réagir respectivement la 1-3 propane diamine et la spermine pour obtenir le DIAM $Cl_4$ **I** ou le SPM $Cl_8$ **II**

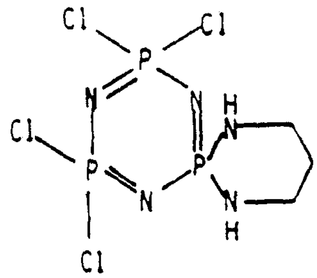

I

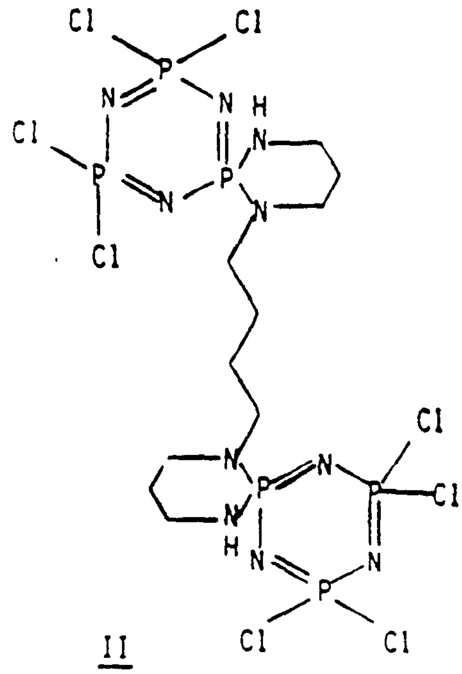

II

4. Procédé selon l'une des revendications 1 à 3 caractérisé en ce que la phase organique est constituée par un solvant ou un mélange de solvants non entièrement miscible à l'eau et pouvant être choisi parmi les éthers ou les hydrocarbures saturés ou aromatiques.

5. Procédé selon la revendication 4 caractérisé en ce que le solvant peut être l'éther éthylique, l'éther isopropylique, le THF, le toluène ou un mélange de ces solvants.

6. Procédé selon l'une des revendications 1 à 5 caractérisé en ce que la phase aqueuse est constituée par une solution de base minérale ou organique.

7. Procédé selon la revendication 6 caractérisé en ce que la base utilisée pourra être la soude ou la potasse à une concentration comprise entre 0,1 N et 10 N et de préférence entre 0,5 et 2,5 N.

8. Procédé selon l'une des revendications 1 à 7 caractérisé en ce que le rapport stoëchiométrique amine/$N_3P_3Cl_6$ est compris entre 1 et 1,5 et de préférence entre 1,05 et 1,2.

9. Procédé selon l'une des revendications 1 à 8 caractérisé en ce que la température de réaction est comprise entre -10 °C et +40 °C et de préférence la température ambianté.

Office européen des brevets

# RAPPORT DE RECHERCHE EUROPEENNE

Numero de la demande

EP 90 40 0240

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,Y | EP-A-0 112 743 (C.N.R.S.)<br>* Page 4, ligne 1 - page 9, ligne 8 *<br>--- | 1-9 | C 07 F 9/659 |
| Y | EP-A-0 145 002 (BORG-WARNER CHEMICALS INC.)<br>* Page 3, ligne 5 - page 7, ligne 28 *<br>----- | 1-9 | |

| DOMAINES TECHNIQUES RECHERCHES (Int. Cl.5) |
|---|
| C 07 F 9/00 |

Le présent rapport a été établi pour toutes les revendications

| Lieu de la recherche | Date d'achèvement de la recherche | Examinateur |
|---|---|---|
| LA HAYE | 20-04-1990 | BESLIER L.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant